# EUROPEAN PATENT APPLICATION

(11) **EP 3 418 405 A1**
(43) Date of publication of application: **26.12.2018**
(21) Application number: 17752956.7
(22) Date of filing: 31.01.2017
(51) Int. Cl.: C22B 23/00, C22B 3/44

(54) **NEUTRALIZATION METHOD AND NICKEL OXIDE ORE HYDROMETALLURGICAL METHOD**

(30) Priority: 17.02.2016 JP 2016027874
(71) Applicant: Sumitomo Metal Mining Co., Ltd., Tokyo 105-8716 (JP)
(72) Inventor: NAKAGAWA, Hidekazu, Tokyo 105-8716 (JP); YAMAGUCHI, Youhei, Tokyo 105-8716 (JP)
(74) Representative: Jones, Nicholas Andrew
(86) International application number: PCT/JP2017/003397
(87) International publication number: WO 2017/141693

(57) **Abstract**

Provided is a method capable of improving the settleability of neutralization precipitate, generated by neutralization, and of reducing floating particles in the supernatant after solid-liquid separation, and also capable of reducing filtration load. This neutralization method is a neutralization method for generating a neutralization slurry by adding a calcium-containing neutralizing agent to a sulfuric acid solution to adjust the pH, and separating the neutralization precipitate from the post-neutralization liquid. Iron oxide in an amount corresponding to 200 weight%-500 weight% of the amount of neutralization precipitate generated is added to the sulfuric acid solution that is being treated. The acidic solution is the leachate obtained by performing leaching using sulfuric acid on nickel oxide ore in a nickel oxide ore hydrometallurical method. For the iron oxide, the leaching residue generated by said leaching can be used.

## Description

### TECHNICAL FIELD

The present invention relates to a neutralization treatment method, and more particularly it relates to a neutralization treatment method capable of improving the settleability of a neutralization precipitate to be obtained and a nickel oxide ore hydrometallurgical method to which the neutralization treatment method is applied.

### BACKGROUND ART

In the process for smelting a metal, a treatment in which a neutralization treatment for adjusting the pH by adding an alkali such as calcium carbonate (CaCO₃) or hydrated lime (Ca(OH)₂) to an acidic solution containing valuable components to be recovered and impurity components to be separated as a neutralizing agent is conducted and either the valuable components or the impurity components are separated as a hydroxide is generally conducted.

For example, the neutralization treatment described above is represented by the following reactions.

Fₑ³⁺ + 3OH⁻ → Fe(OH)₃ ... (i)

CaCO₃ + 2H⁺ → Ca²⁺ + H₂O+ CO₂ ... (ii)

Fe₂(SO₄)₃ + 3CaCO₃ + 9H₂O → 2Fe(OH)₃ + 3CaSO₄·2H₂O + H₂O ... (iii)

It is known that the neutralization precipitate which contains gypsum (CaSO₄·2H₂O) as a main component and is generated by the neutralization reactions described above is a fine particle, is bulky, and exhibits poor settleability and filterability.

Meanwhile, industrial solid-liquid separation of a neutralization precipitate generated by a neutralization reaction is often conducted by using, for example, a thickener, and a treatment for precisely filtering the supernatant by using a filter press or the like is generally conducted after the rough solid-liquid separation using a thickener or the like.

It is possible to prevent contamination of the liquid components after the neutralization step in the smelting process and to decrease the filtration load by conducting such two-stage solid-liquid separation.

However, the neutralization precipitate is bulky and exhibits poor settleability and filterability as described above, and there is thus a case in which an undesirable situation occurs that solid-liquid separation insufficiently proceeds in a rough treatment using a thickener or the like and the neutralization precipitate flows into the supernatant as floating particles.

Such an increase of floating particles promotes clogging of the filter cloth to be used in a subsequent apparatus such as a filter press, and as a result, the flow rate in filtration decreases and the lifetime of filter cloth shortens.
Hence, there is a demand for a method which makes it possible to improve the settleability of a neutralization precipitate and thus to obtain a supernatant having a high clarity even after solid-liquid separation using a thickener or the like.

For example, as a method for improving the settling property and filterability of such a neutralization precipitate, a method in which a condensing agent or a coagulating agent is added, a method in which a seed crystal is added, a method in which a reaction temperature is raised, and the like are known.

Specifically, Patent Document 1 discloses a method for decreasing the SS content in the supernatant by improving the settling property of a neutralization precipitate in the neutralization step and thus improving the filterability together with the compactification of the neutralization facility. This method is a method in which a predetermined amount of hematite is added to the liquid to be neutralized in advance, then calcium carbonate, calcium hydroxide, or the like is added, and simultaneous neutralization is conducted, whereby the settling property of a neutralization precipitate to be generated is improved and the bulk of the neutralization precipitate decreases. Particularly, it is indicated that it is effective to set the amount of hematite to be added to 50% or more with respect to a precipitate to be generated by neutralization as a weight ratio.

In addition, Patent Document 2 discloses a wastewater treatment method for separating and recovering an aluminum precipitate having a high density and a high concentration from acidic wastewater which contains aluminum ions and is discharged in the hydrometallurgy of nickel oxide ore. This method is a method in which a slurry is prepared by adding an alkali and a solid substance containing iron to an acidic wastewater containing aluminum ions and the slurry is allowed to stand still for solid-liquid separation, whereby an aluminum precipitate and wastewater are generated.

However, in the methods disclosed in Patent Document 1 and Patent Document 2, there is a case in which the clarity of the supernatant after solid-liquid separation varies depending on the fluctuation in treatment load in the neutralization step and solid-liquid separation step and the fluctuation in the pH of the starting liquid.

In particular, calcium-based neutralizing agents such as hydrated lime and limestone are often industrially used as a neutralizing agent, but in the case of conducting neutralization using a calcium-based neutralizing agent, the neutralizing agent serves as a nucleus so that a fine neutralization precipitate is generated, and the fine neutralization precipitate becomes a factor to generate floating particles and a precipitate having a high bulk and a low density.

Meanwhile, when a water-soluble neutralizing agent such as sodium hydroxide or magnesium oxide is used as a neutralizing agent, it is possible to suppress the generation of a fine precipitate unlike the case of using a calcium-based neutralizing agent. However, it is difficult to industrially use a water-soluble neutralizing agent from the viewpoint of cost and quantitative procurement.

Furthermore, in order to improve the operation rate and to decrease the work load, it is desired to further decrease the load of the filter installed in the subsequent step and there is a demand for a method for stably obtaining a supernatant having a high clarity and less floating particles.
Patent Document 1: Japanese Unexamined Patent Application, Publication No. 2004-225120
Patent Document 2: Japanese Unexamined Patent Application, Publication No. 2014-37563

### DISCLOSURE OF THE INVENTION

### Problems to be Solved by the Invention

The present invention has been proposed in view of such circumstances, and an object thereof is to provide a method capable of improving the settleability of a neutralization precipitate to be generated by a neutralization treatment, decreasing floating particles in the supernatant after solid-liquid separation, and decreasing the filtration load.

### Means for Solving the Problems

The inventors of the present invention have conducted intensive investigations to solve the problems described above.
As a result, it has been found out that it is possible to obtain a neutralization precipitate exhibiting favorable settleability by adding a neutralizing agent and a specific amount of iron oxide to a sulfuric acid solution, which is a treatment target, and then conducting a neutralization treatment of the sulfuric acid solution, and thus the present invention has been completed.
(1) A first aspect of the present invention is a neutralization treatment method, including generating a neutralization slurry by adding a neutralizing agent containing calcium to a sulfuric acid solution to adjust a pH of the sulfuric acid solution and separating the neutralization slurry into a neutralization precipitate and a post-neutralization liquid, in which iron oxide is added to the sulfuric acid solution in an amount corresponding to 200 wt% to 500 wt% of an amount of a neutralization precipitate to be generated.
(2) A second aspect of the present invention is the neutralization treatment method according to the first aspect, in which a pH of the post-neutralization liquid obtained by being separated from the neutralization slurry is adjusted to a range of 3.15 to 3.25.
(3) A third aspect of the present invention is the sulfuration treatment method according to the first or second aspect, in which the acidic solution is a leachate obtained by subjecting nickel oxide ore to a leaching treatment using sulfuric acid in a nickel oxide ore hydrometallurgical method and a leaching residue to be generated by the leaching treatment is added as the iron oxide.
(4) A fourth aspect of the present invention is a nickel oxide ore hydrometallurgical method, including subjecting nickel oxide ore to a leaching treatment using sulfuric acid to leach nickel from the nickel oxide ore and recovering nickel from the resulting leachate, in which the method includes a neutralization step of generating a neutralization slurry by adding a neutralizing agent containing calcium to the leachate to adjust a pH of the leachate and separating the neutralization slurry into a neutralization precipitate and a post-neutralization liquid, and iron oxide is added to the leachate in an amount corresponding to 200 wt% to 500 wt% of an amount of a neutralization precipitate to be generated in the neutralization step.
(5) A fifth aspect of the present invention is the nickel oxide ore hydrometallurgical method according to the fourth aspect, in which the iron oxide is a leaching residue to be generated by the leaching treatment.

### Effects of the Invention

According to the present invention, it is possible to improve the settleability of a neutralization precipitate to be generated by a neutralization treatment, to decrease floating particles in the supernatant after solid-liquid separation, and to decrease the load of the filtration treatment in the subsequent step.

### BRIEF DESCRIPTION OF THE DRAWINGS

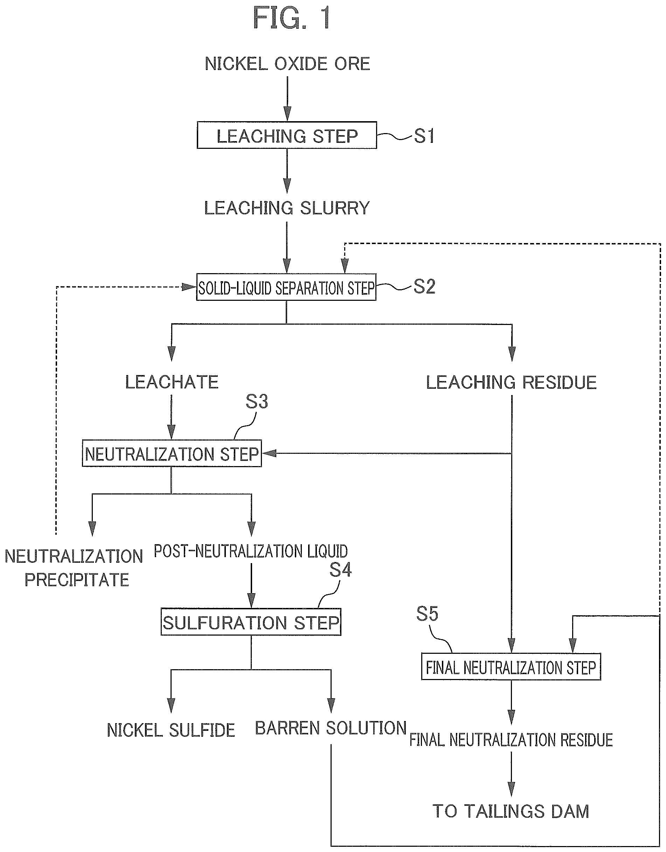

Fig. 1 is a process chart which illustrates an example of the flow of a nickel oxide ore hydrometallurgical process.

### PREFERRED MODE FOR CARRYING OUT THE INVENTION

Hereinafter, specific embodiments of the present invention (hereinafter referred to as the "present embodiments") will be described in detail, but the present invention is not limited to the following embodiments, and various modifications can be made without changing the gist of the present invention. Incidentally, the expression "X to Y" (X and Y are arbitrary numerical values) in the present specification means "X or more and Y or less" unless otherwise specified.

### «1. Neutralization treatment method»

The neutralization treatment method according to the present embodiment is a neutralization treatment method, which includes generating a neutralization slurry by adding a neutralizing agent containing calcium to a sulfuric acid solution to adjust a pH of the sulfuric acid solution and separating the neutralization slurry into a neutralization precipitate and a post-neutralization liquid.

Moreover, in this neutralization treatment method, a neutralizing agent and a specific amount of iron oxide are added to the sulfuric acid solution, which is a treatment target, and then the neutralization treatment of the sulfuric acid solution is conducted. Specifically, the neutralization treatment method is characterized in that iron oxide is added in an amount corresponding to 200 wt% to 500 wt% of the amount of a neutralization precipitate to be generated.

According to such a neutralization treatment method, it is possible to suppress the miniaturization of the particles of a neutralization precipitate to be generated, to improve the settleability, and to decrease the amount of floating particles in the post-neutralization liquid, which is the supernatant. In addition, it is possible to decrease the filtration load of the slurry containing the neutralization precipitate with respect to the filtration apparatus and to realize an efficient separation treatment.

As a sulfuric acid solution, which is a treatment target, it is possible to use a sulfuric acid solution containing an elemental component to form a precipitate with a neutralizing agent containing calcium as an impurity. Specifically, for example, it is possible to use a leachate obtained by a leaching treatment using sulfuric acid in a nickel oxide ore hydrometallurgical process. Incidentally, the details of the leachate as well as the flow of the hydrometallurgical process will be described later.

The neutralizing agent contains calcium, and examples thereof may include a calcium carbonate (CaCO₃) slurry and a hydrated lime (Ca(OH)₂) slurry.

Incidentally, in this neutralization treatment method, the pH of the post-neutralization liquid to be obtained is set preferably to a range of 3.0 to 4.0 and more preferably to a range of 3.15 to 3.25 by adding the neutralizing agent described above to the sulfuric acid solution.

Here, the neutralization treatment method according to the present embodiment is characterized in that a neutralizing agent and iron oxide are added to a sulfuric acid solution, which is a treatment target, as described above, and the amount of iron oxide to be added is set to an amount corresponding to 200 wt% to 500 wt% of the amount of a neutralization precipitate to be generated by the neutralization treatment.

Iron oxide acts as a so-called seed crystal of a neutralization precipitate to be generated. It is possible to grow the particles of a neutralization precipitate based on iron oxide as a seed crystal and to suppress miniaturization of the neutralization precipitate by setting the amount of iron oxide to be added to a range of 200% to 500% with respect to a neutralization precipitate to be generated as a weight ratio. This makes it possible to improve the settleability of the neutralization precipitate and to increase the clarity of the supernatant. On the contrary, when the amount of iron oxide to be added is less than 200% with respect to a neutralization precipitate to be generated as a weight ratio, the amount is not sufficient as an amount to act as a seed crystal, a fine nucleus of gypsum is generated, the settleability deteriorates, and the clarity of the supernatant also deteriorates. Meanwhile, when the amount of iron oxide to be added is more than 500% with respect to a neutralization precipitate to be generated as a weight ratio, a state in which the seed crystals are excessively present is formed, thus the solid load in the solid-liquid separation treatment increases, and the clarity of the supernatant rather deteriorates.

In addition, this amount of iron oxide to be added is preferably set to an amount corresponding to 250 wt% to 350 wt% of the amount of a neutralization precipitate to be generated by the neutralization treatment. Preferably, by adding iron oxide in such an amount, it is possible to more effectively suppress miniaturization of a neutralization precipitate to be obtained and to more efficiently improve the settleability. In addition, it is possible to decrease the solid load at the time of solid-liquid separation as well.

Iron oxide is not particularly limited, but it is preferably one that is hardly soluble in a sulfuric acid solution, which is a treatment target. In addition, as this iron oxide, it is possible to use a leaching residue to be obtained in the leaching step of a nickel oxide ore hydrometallurgical process to be described in detail later. This leaching residue contains hematite (Fe₂O₃) as a main component.

In the neutralization treatment method according to the present embodiment, a neutralizing agent containing calcium is added to a sulfuric acid solution and also iron oxide is added thereto in an amount corresponding to 200 wt% to 500 wt% of the amount of a neutralization precipitate to be generated, and then the neutralization treatment is conducted as described above. According to such a method, it is possible to generate a neutralization precipitate of which the miniaturization is suppressed and the settleability is enhanced. Moreover, it is possible to obtain a supernatant (post-neutralization liquid) having a high clarity by conducting the solid-liquid separation treatment of a solution (slurry) containing such a neutralization precipitate by using a solid-liquid separator such as a thickener. In addition, a neutralization precipitate exhibiting favorable settleability is a precipitate having a low bulk and a high density, and it is thus easy to handle the neutralization precipitate. «2. Application to nickel oxide ore hydrometallurgical method»

In the neutralization treatment method according to the present embodiment, as described above, a sulfuric acid solution containing an element that forms a precipitate by addition of a neutralizing agent containing calcium such as limestone or hydrated lime is used as a treatment target.

Moreover, this neutralization treatment method can be applied, for example, to a treatment in a neutralization step in a nickel oxide ore hydrometallurgical process. At this time, as the sulfuric acid solution, it is possible to use a leachate obtained by subjecting a slurry of nickel oxide ore of a raw material to a leaching treatment using sulfuric acid at high temperature and high pressure. This leachate contains impurity components such as aluminum in addition to valuable metals such as nickel and cobalt.

Hereinafter, the outline of the nickel oxide ore hydrometallurgical process will be described and a specific mode in which the neutralization treatment method described above is applied to a treatment in the neutralization step in the hydrometallurgical process will be described. Incidentally, the nickel oxide ore hydrometallurgical process will be described by taking a hydrometallurgical method by the high pressure acid leach method (HPAL method) in which leaching is conducted at high temperature and high pressure as an example.

### <2-1. Respective steps in nickel oxide ore hydrometallurgical process>

Fig. 1 is a process chart which illustrates an example of the flow of a nickel oxide ore hydrometallurgical process. As illustrated in Fig. 1, the nickel oxide ore hydrometallurgical process includes a leaching step S1 in which sulfuric acid is added to a slurry of nickel oxide ore of a raw material and a leaching treatment is conducted at high temperature and high pressure, a solid-liquid separation step S2 in which a leaching residue is separated from the leaching slurry and a leachate containing nickel and cobalt is obtained, a neutralization step S3 in which the pH of the leachate is adjusted, the impurity elements in the leachate are separated as a neutralization precipitate slurry, and a post-neutralization liquid is obtained, and a sulfuration step (nickel recovery step) S4 in which sulfides of nickel and cobalt are generated by adding hydrogen sulfide gas to the post-neutralization liquid. Furthermore, this hydrometallurgical process includes a final neutralization step S5 of recovering a barren solution discharged in the sulfuration step S4 and detoxifying the barren solution, and generating a final neutralization residue.

### (1) Leaching step

In the leaching step S1, sulfuric acid is added to a slurry (ore slurry) of nickel oxide ore and the mixture is stirred under conditions of a temperature of about 230°C to 270°C and a pressure of about 3 to 5 MPa by using a high temperature pressurization reactor such as an autoclave, thereby generating a leaching slurry composed of a leachate and a leaching residue.

Examples of the nickel oxide ore may mainly include so-called laterite ore such as limonite ore and saprolite ore. The nickel content in the laterite ore is usually 0.8 wt% to 2.5 wt%, and nickel is contained as a hydroxide or a silica magnesia (magnesium silicate) mineral. In addition, the content of iron is 10 wt% to 50 wt%, and iron is mainly in the form of a trivalent hydroxide (goethite), but divalent iron is partly contained in the silica magnesia mineral. In addition, in the leaching step S1, an oxide ore containing valuable metals such as nickel, cobalt, manganese, and copper, for example, manganese nodules reserved in the deep ocean can be used in addition to such laterite ore.

In the leaching treatment in the leaching step S1, for example, a leaching reaction and a high temperature thermal hydrolysis reaction represented by the following Formulas (i) to (v) occur and leaching as sulfates of nickel, cobalt, and the like and immobilization of leached iron sulfate as hematite (Fe₂O₃) proceed. However, immobilization of iron ions does not completely proceed and thus the liquid portion of the leaching slurry to be obtained usually contains divalent and trivalent iron ions in addition to nickel, cobalt, and the like. Incidentally, in this leaching step S1, it is preferable to adjust the pH of the leachate to be obtained to 0.1 to 1.0 from the viewpoint of the filterability of the leaching residue containing hematite to be generated in the solid-liquid separation step S2 of the next step.

### • Leaching reaction

MO + H₂SO₄ → MSO₄ + H₂O ... (i)

(incidentally, M in Formula (i) represents Ni, Co, Fe, Zn, Cu, Mg, Cr, Mn, or the like)

2Fe(OH)₃ + 3H₂SO₄ → Fe₂(SO₄)₃ + 6H₂O ... (ii)

FeO + H₂SO₄ → FeSO₄ + H₂O ... (iii)

### • High temperature thermal hydrolysis reaction

2FeSO₄ + H₂SO₄ + 1/2O₂ → Fe₂(SO₄)₃ + H₂O ... (iv)

Fe₂(SO₄)₃ + 3H₂O → Fe₂O₃ + 3H₂SO₄ ... (v)

Incidentally, the amount of sulfuric acid to be added to the autoclave charged with the ore slurry is not particularly limited, but an excessive amount, in which iron in the ore may be leached, is used. For example, the amount is set to about 300 kg to 400 kg per 1 ton of ore.

### (2) Solid-liquid separation step

In the solid-liquid separation step S2, the leaching slurry generated in the leaching step S1 is washed and separated into a leachate containing valuable metals such as nickel and cobalt and a leaching residue containing hematite as a main component.

In the solid-liquid separation step S2, the leaching slurry is mixed with a washing liquid and then subjected to a solid-liquid separation treatment using a solid-liquid separator such as a thickener. Specifically, first, the leaching slurry is diluted with the washing liquid, and then the leaching residue in the leaching slurry is concentrated as a precipitate in the thickener. This makes it possible to decrease nickel and cobalt to be attached to the leaching residue depending on the degree of dilution. Incidentally, it is possible to attempt improvement in the recovery rates of nickel and cobalt by using thickeners, which have such a function and are connected in multiple stages in the actual operation.

### (3) Neutralization step

In the neutralization step S3, a neutralizing agent such as a calcium carbonate (limestone) slurry or a calcium hydroxide (hydrated lime) slurry is added to the resulting leachate and a neutralization precipitate containing impurity components and a post-neutralization liquid, which is a mother liquid for nickel recovery, are obtained.

In the neutralization step S3, a neutralizing agent is added to the leachate so as to adjust the pH of a post-neutralization liquid to be obtained to a predetermined range and a post-neutralization liquid to be a base of the mother liquid for nickel recovery and a neutralization precipitate containing aluminum and iron as impurity elements are formed. In the neutralization step S3, the excessive acid used in the leaching treatment by the HPAL method is neutralized, a final neutralization liquid is generated, and also impurities such as aluminum ions and trivalent iron ions remaining in the solution are removed as a neutralization precipitate by subjecting the leachate to a neutralization treatment (liquid purification treatment) in this manner.

Incidentally, it is possible to apply the neutralization treatment method described above to the neutralization treatment in this neutralization step S3 and to generate a neutralization precipitate of which the miniaturization is suppressed and the settleability is enhanced.

### (4) Sulfuration step (nickel recovery step)

In the sulfuration step S4, the post-neutralization liquid, which is a sulfuric acid solution containing nickel and cobalt, is used as a sulfuration reaction starting liquid, a sulfuration reaction is caused to occur by blowing hydrogen sulfide gas into the sulfuration reaction starting liquid, and sulfides of nickel and cobalt containing a small amount of impurity components and a barren liquor (post-sulfuration liquor) in which the concentrations of nickel and cobalt are stabilized at a low level are generated.

Incidentally, zinc can be selectively separated as a sulfide prior to separation of nickel and cobalt as a sulfide in a case in which zinc is contained in the post-neutralization liquid.

The sulfuration treatment in the sulfuration step S4 can be conducted by using a sulfuration reactor and the like, and hydrogen sulfide gas is blown into the gas phase portion in the reactor with respect to the sulfuration reaction starting liquid introduced into the sulfuration reactor and the hydrogen sulfide gas is dissolved in the solution to cause a sulfuration reaction to occur. By this sulfuration treatment, nickel and cobalt contained in the sulfuration reaction starting liquid are immobilized as a sulfide and recovered.

Incidentally, after completion of the sulfuration reaction, the resulting slurry containing sulfides of nickel and cobalt is charged into a precipitator such as a thickener and subjected to a precipitation separation treatment and only the sulfides are separated and recovered from the bottom of the thickener. Meanwhile, the aqueous solution component is caused to overflow from the top of the thickener and recovered as a barren solution. Incidentally, the recovered barren solution can be repeatedly used in the solid-liquid separation step S2.

### (5) Final neutralization step

In the final neutralization step S5, a neutralization treatment (detoxification treatment) for adjusting the pH of the barren solution, which contains impurity elements such as iron, magnesium, manganese, and the like and is discharged in the sulfuration step S4 described above, to a predetermined pH range satisfying the effluent standard.

As a method of the detoxification treatment in the final neutralization step S5, namely, a pH adjusting method, for example, it is possible to adjust the pH of the barren solution to a predetermined range by adding a neutralizing agent such as a calcium carbonate (limestone) slurry or a calcium hydroxide (hydrated lime) slurry to the barren solution.

A final neutralization residue is generated by the neutralization treatment using such a neutralizing agent and stored in the tailings dam. Meanwhile, the solution after the neutralization treatment meets the effluent standard and is discharged outside the system.

### <2-2. Neutralization treatment method in neutralization step and final neutralization step>

Here, the neutralization treatment method described above can be applied to a treatment in the neutralization step S3, namely, the neutralization treatment of the leachate, which is a sulfuric acid solution, which contains nickel and the like and is obtained by adding sulfuric acid to the slurry of nickel oxide ore and conducting leaching.

In other words, in the nickel oxide ore hydrometallurgical process according to the present embodiment, the neutralization treatment is conducted by adding a neutralizing agent containing calcium to the sulfuric acid solution, which is a treatment target, and also adding iron oxide thereto in an amount corresponding to 200 wt% to 500 wt% of the amount of a neutralization precipitate to be generated, and a neutralization precipitate having immobilized impurity components and a post-neutralization liquid are generated in the neutralization step S3.

The details of the specific method of the neutralization treatment are the same as those described above, thus the description here will be omitted, but in the present embodiment, it is possible to suppress the miniaturization of a neutralization precipitate to be generated and to improve the settleability of the neutralization precipitate by adding a specific amount of iron oxide to the leachate obtained through the leaching step S1 together with a neutralizing agent and then conducting the neutralization treatment in this manner. This makes it possible to decrease floating particles in the supernatant to be a post-neutralization liquid at the time of solid-liquid separation after the neutralization treatment and to obtain a post-neutralization liquid having a high clarity.

Moreover, it is possible to decrease the amount of the liquid components (post-neutralization liquid) accompanying the neutralization precipitate since it is possible to generate a neutralization precipitate exhibiting favorable settleability and a low bulk in this manner. This makes it possible to prevent loss of valuable metals such as nickel and cobalt contained in the post-neutralization liquid accompanying the neutralization precipitate in this hydrometallurgical process and to recover nickel, cobalt, and the like at a high recovery rate.

In addition, by applying the neutralization treatment method described above to the neutralization treatment in the neutralization step S3 of this hydrometallurgical process, for example, it is possible to use the leaching residue, which is generated in the leaching step S1 and separated from the leachate, as the iron oxide and to conduct an efficient and stable operation of the hydrometallurgical process as a whole.

Specifically, a leaching residue to be obtained in the leaching treatment in the leaching step S1 contains hematite (Fe₂O₃) as a main component, and the leaching residue is recovered from the bottom of the thickener or the like by the solid-liquid separation treatment in the solid-liquid separation step S2. Meanwhile, the leachate from which the leaching residue has been separated and removed is transferred to a neutralization treatment tank or the like for being subjected to a neutralization treatment, but it is possible to generate a neutralization precipitate exhibiting favorable settleability by a simple operation as a neutralizing agent is added to the leachate transferred to the neutralization treatment tank and the leaching residue recovered in the solid-liquid separation step S2 is added to the leachate at a specific proportion as iron oxide.

Incidentally, as also illustrated in the process chart of Fig. 1, a part of the neutralization precipitate obtained in this neutralization step S3 can be repeatedly used in the solid-liquid separation step S2.

In addition, the neutralization treatment method described above can also be applied to a treatment in the final neutralization step S5, namely, the neutralization treatment of a post-sulfuration liquid (wastewater) obtained after separating a sulfide of nickel generated by conducting a sulfuration treatment of the leachate. Specifically, it is possible to generate a neutralization precipitate exhibiting favorable settleability by a simple operation in the same manner as a neutralizing agent is added to the post-sulfuration liquid after the sulfuration treatment, which has been transferred to the neutralization treatment tank and the leaching residue recovered in the solid-liquid separation step S2 is added to the post-sulfuration liquid at a specific proportion as iron oxide.

### EXAMPLES

Hereinafter, the present invention will be described more specifically with reference to Examples, but the present invention is not limited to the following Examples at all.

### [Example 1]

In the nickel oxide ore hydrometallurgical process, sulfuric acid was added to a slurry of nickel oxide ore and leaching treatment was conducted at high temperature and high pressure. Thereafter, the slurry after the leaching treatment was subjected to a solid-liquid separation treatment to separate the slurry into a leachate and a leaching residue, thereby obtaining a leachate containing a valuable metal such as nickel. Incidentally, the leachate had a pH of 3.04 when the liquid temperature was room temperature.

Next, a neutralization treatment was conducted using the resulting leachate as a starting liquid. A calcium carbonate (CaCO₃) slurry at 20 wt% to 30 wt% as a solid amount was used as a neutralizing agent. Thereafter, a neutralizing agent was added to the neutralization starting liquid and iron oxide was also added thereto. Incidentally, the neutralizing agent was added so that the pH of the post-neutralization liquid after the neutralization treatment became 3.21.

Here, hematite (Fe₂O₃) having an iron grade of 40 wt% to 45 wt% was used as iron oxide. In addition, the amount of hematite to be added as iron oxide was set to an amount corresponding to 274% with respect to a neutralization precipitate to be generated as a weight ratio. Incidentally, the leaching residue generated by the leaching treatment was used as hematite.

The neutralization treatment was conducted by setting the residence time in the reactor to 0.7 hours to 1.0 hours and maintaining the reaction temperature at about 55°C. After such a neutralization treatment was conducted, the resulting neutralization slurry was subjected to solid-liquid separation using a thickener, and the turbidity of the supernatant (post-neutralization liquid) obtained by separation using a thickener was measured. Incidentally, the measurement was conducted by using a scattered light type turbidity meter.

As a result, the turbidity of the supernatant was 24 NTU, and the water area load of the supernatant with respect to the water area of the thickener was 29.3 m³/D/m².

### [Example 2]

In Example 2, the amount of hematite to be added as iron oxide was set to an amount corresponding to 490% with respect to a neutralization precipitate to be generated as a weight ratio. Incidentally, the neutralizing agent was added so that the pH of the post-neutralization liquid after the neutralization treatment became 3.22. The treatment was conducted in the same manner as in Example 1 except these.

As a result, the turbidity of the supernatant was 38 NTU, and the water area load of the supernatant with respect to the water area of the thickener was 34.2 m³/D/m².

### [Comparative Example 1]

In Comparative Example 1, one having a pH of 2.53 was used as a leachate, which was a neutralization starting liquid. Thereafter, a neutralizing agent was added to the leachate to adjust the pH to 3.25, and then the neutralization treatment was conducted. At this time, hematite as iron oxide was added in an amount corresponding to 180% with respect to a neutralization precipitate to be generated as a weight ratio. The treatment was conducted in the same manner as in Example 1 except these.

As a result, the turbidity of the supernatant was 83 NTU, and the water area load of the supernatant with respect to the water area of the thickener was 32.9 m³/D/m².

### [Comparative Example 2]

In Comparative Example 2, the amount of hematite to be added as iron oxide was set to an amount corresponding to 1080% with respect to a neutralization precipitate to be generated as a weight ratio. Incidentally, the neutralizing agent was added so that the pH of the post-neutralization liquid after the neutralization treatment became 3.23. The treatment was conducted in the same manner as in Example 1 except these.

As a result, the turbidity of the supernatant was 62 NTU, and the water area load of the supernatant with respect to the water area of the thickener was 33.5 m³/D/m².

The results on the neutralization treatment conducted in Examples and Comparative Examples are summarized in the following Table 1.

**[Table 1]**

| | Iron oxide (Weight ratio) [%] | Post-neutralization liquid (Supernatant) | | Thickener water area load [m³/D/m²] |
|---|---|---|---|---|
| | | Turbidity [NTU] | pH | |
| Example 1 | 274 | 24 | 3.21 | 29.3 |
| Example 2 | 490 | 38 | 3.22 | 34.2 |
| Comparative Example 1 | 180 | 83 | 3.25 | 32.9 |
| Comparative Example 2 | 1080 | 62 | 3.23 | 33.5 |

As described above, in Examples 1 and 2, post-neutralization liquids having a high clarity, namely, a turbidity of 40 NTU or less were obtained as the neutralization treatment was conducted by adding iron oxide corresponding to 200% to 500% with respect to a neutralization precipitate to be generated as a weight ratio. In addition, neutralization precipitates having a high settling velocity, a low bulk, and a high density were obtained.

On the other hand, in Comparative Example 1 and Comparative Example 2, the turbidity of the resulting supernatants was high as compared with that in Examples and neutralization precipitates having a slower settling velocity than those in Examples and a high bulk were generated.

## Claims

1. A neutralization treatment method, comprising generating a neutralization slurry by adding a neutralizing agent containing calcium to a sulfuric acid solution to adjust a pH of the sulfuric acid solution and separating the neutralization slurry into a neutralization precipitate and a post-neutralization liquid, wherein
iron oxide is added to the sulfuric acid solution in an amount corresponding to 200 wt% to 500 wt% of an amount of a neutralization precipitate to be generated.

2. The neutralization treatment method according to claim 1, wherein a pH of the post-neutralization liquid obtained by being separated from the neutralization slurry is adjusted to a range of 3.15 to 3.25.

3. The neutralization treatment method according to claim 1 or 2, wherein the sulfuric acid solution is a leachate obtained by subjecting nickel oxide ore to a leaching treatment using sulfuric acid in a nickel oxide ore hydrometallurgical method, and
a leaching residue to be generated by the leaching treatment is added as the iron oxide.

4. A nickel oxide ore hydrometallurgical method, comprising subjecting nickel oxide ore to a leaching treatment using sulfuric acid to leach nickel from the nickel oxide ore and recovering nickel from the resulting leachate, wherein
the method comprises a neutralization step of generating a neutralization slurry by adding a neutralizing agent containing calcium to the leachate to adjust a pH of the leachate and separating the neutralization slurry into a neutralization precipitate and a post-neutralization liquid, and
in the neutralization step,
iron oxide is added to the leachate in an amount corresponding to 200 wt% to 500 wt% of an amount of a neutralization precipitate to be generated.

5. The nickel oxide ore hydrometallurgical method according to claim 4, wherein the iron oxide is a leaching residue to be generated by the leaching treatment.
